# EUROPÄISCHE PATENTSCHRIFT

(11) **EP 2 631 120 B1**
(45) Veröffentlichungstag und Bekanntmachung des Hinweises auf die Patenterteilung: **26.12.2018**
(21) Anmeldenummer: 13150598.4
(22) Anmeldetag: 09.01.2013
(51) Int. Cl.: B60Q 1/068

(54) **Aussenverrastende Einstellwelle zum Einstellen eines Fahrzeugscheinwerfers**
Externally locking adjustment shaft for adjusting a vehicle headlight
Axe de réglage pouvant être enclenché de l'extérieur pour le réglage d'un phare de véhicule

(30) Priorität: 22.02.2012 AT 2222012
(43) Veröffentlichungstag der Anmeldung: 28.08.2013
(73) Patentinhaber: ZKW Group GmbH, 3250 Wieselburg (AT)
(72) Erfinder: Reithner, Patrick, 3671 Marbach/Donau (AT); Leonhartsberger, Rudolf, 3393 Zelking (AT); Baminger, Peter, 3241 Kirnberg (AT)
(74) Vertreter: Patentanwaltskanzlei Matschnig & Forsthuber OG

(56) Entgegenhaltungen:
- WO-A1-2009/076438
- DE-A1- 4 141 150
- DE-C1- 4 216 275
- US-A- 6 017 137

## Beschreibung

Die Erfindung betrifft eine Einstellwelle, über welches in einem Fahrzeugscheinwerfer eine einstellbare Komponente des Scheinwerfers, insbesondere ein Reflektor oder anderes Lichtmodul, über eine innere Stellwelle einstellbar ist, mit einem Kopfteil und mit einem an den Kopfteil anschließenden Schaft, der eine um eine Längsachse im Wesentlichen drehsymmetrische Grundform aufweist, sowie mit einem Ritzel, welches im montierten Zustand mit einem Zahnradkranz der inneren Stellwelle zusammenwirkt, wobei der Kopfteil der Einstellwelle zumindest einen von der Längsachse nach außen ragenden Verrasthaken mit zumindest einem daran befindlichen Rastmittel aufweist, wobei der Schaft eine umlaufende Schulter aufweist, an die ein vorzugsweise zylindrischer Abschnitt zur Aufnahme eines Dichtrings anschließt. Zudem betrifft die Erfindung einen Einstellmechanismus in einem Fahrzeugscheinwerfer zum Verstellen einer einstellbaren Komponente des Scheinwerfers, mit einer Einstellwelle der genannten Art. Außerdem betrifft die Erfindung ein Verfahren zum Erzeugen einer Einstellwelle der genannten Art in einem Abformverfahren, insbesondere Spritzgießverfahren, unter Verwendung eines Formwerkzeugs, wobei das Formwerkzeug ein erstes und ein zweites Formteil umfasst, die zwischen sich einen Hohlraum zum Formen der Einstellwelle bilden, wobei in dem ersten Formteil eine Vertiefung ausgebildet ist, die eine Negativform einer Außenfläche des Schaftes und des Ritzels der Einstellwelle bildet, wobei die Vertiefung im Bereich des Schaftes eine umlaufende Schulter aufweist, an die ein vorzugsweise zylindrischer Abschnitt anschließt, zur Formgebung der Schulter und des vorzugsweise zylindrischen Abschnitts der Einstellwelle zur Aufnahme eines Dichtrings. Eine Einstellwelle dieser Art ist beispielsweise in DE 4141150 A1 offenbart, worin es als Eingangswelle bezeichnet ist. Diese Eingangswelle ist in einem Rohrkörper drehbar gelagert, sodass ein äußerer Teil zugänglich ist, während im Inneren ein Ritzel der Eingangswelle in ein Ritzel einer Ausgangswelle eingreift und so die Drehbewegung zum Einstellen des Scheinwerfers überträgt. Die Eingangswelle ist mithilfe von an der Innenseite des Rohrkörpers befindlichen Rippe oder Nut nach Art eines Schnappsitzes gehalten. Zusätzlich ist ein auf den Rohrkörper aufgeschobener Kragen zum Festhalten der Eingangswelle vorgesehen. Zum Abdichten ist ein O-Ring vorgesehen, der in einer umlaufenden Nut der Eingangswelle untergebracht ist. Ein dieser Eingangswelle ähnliches Element ist in DE 196 05 758 A1 beschrieben, das jedoch keinen Kragen aufweist. Der Aufbau dieser herkömmlichen Einstellelemente ist aufwändig, weil es mehrere kompliziert geformte Bauteile umfasst, deren Herstellung zudem eine Vielzahl von Formteilen erfordert.
Eine weitere Einstellwelle ist in EP 0 615 880 A1 als Einstellknopf beschrieben, welcher in einen Drehstift eingesteckt wird, wobei der Drehstift in einem Zahnrad endet, das eine zweite Stellwelle dreht. Auch diese Einrichtung ist aufwändig, weil eine Vielzahl von Bauteilen zusammengefügt werden müssen. Zudem ist der Einstellknopf auf einem O-Ring mit Dichtwirkung in axialer Richtung gelagert, weshalb Kräfte, die während eines Einstellvorgangs unweigerlich auf den Einstellknopf ausgeübt werden, vom O-Ring aufgenommen werden müssen. Dies bringt eine hohe Belastung des O-Rings mit sich. Ein diesem Einstellknopf ähnliches Verstellrad ist in DE 4013 893 A1 dargestellt.
Eine Einstellwelle, die dem Oberbegriff des Anspruchs 1 entspricht, ist in der DE 42 16 275 C1 beschrieben. Weitere Einstellanordnungen sind in den Druckschriften US 5,913,601 und US 2005/0145050 A1 beschrieben.
Es ist daher eine Aufgabe der Erfindung, eine von außen zugängliche Einstellwelle mit einer Formgebung zu schaffen, die eine zuverlässige und doch leicht herzustellende Verrastung in dem Hohlsitz der Einstellwelle bei guter Abdichtung mit einem O-Ring und auch die Herstellung der Einstellwelle mit einer möglichst geringen Anzahl von Werkzeugen (insbesondere Formwerkzeugen bei Spritzgießerzeugung) ermöglicht.
Diese Aufgabe wird ausgehend von einer Einstellwelle der eingangs genannten Art dadurch gelöst, dass das zumindest eine Rastmittel des Verrasthakens zum Schaft hin orientiert ist und dass der Verrasthaken eine Versatzöffnung aufweist, die oberhalb des Rastmittels liegt und durch welche das Rastmittel, in Blickrichtung parallel zur Längsachse auf den Kopfteil gesehen, zur Gänze von oben sichtbar ist.

Durch diese erfindungsgemäße Lösung ergibt sich eine vereinfachte Herstellung des Bauteils der Einstellwelle. Die nach außen gerückte Verrastung gestattet eine einfachere Gestaltung sowohl der Einstellwelle selbst als auch des mit diesem korrespondierenden Gehäuseteils, in dem die Einstellwelle montiert wird. Dies gestattet, den Schaft in einem einzigen formgebenden Teil der Gussform zu formen. Dadurch wird vermieden, dass an dem Schaft durch Fugen der Gussform bedingte Trennungsmarkierungen (Formtrennungen) entstehen, die sich als Grat bemerkbar machen können. Zudem wird die Dichtung durch den O-Ring verbessert, und der O-Ring nützt sich deutlich weniger ab; zudem wird eine Beschädigung des O-Rings beim Einbau der Einstellwelle vermieden.
Die Maßnahme des durch die Versatzöffnung (in Blickrichtung parallel zur Längsachse) gesehen freiliegenden Verrasthakens eine Versatzöffnung ermöglicht bei der Herstellung der Einstellwelle durch Spritzgießverfahren ein Entformen der Einstellwelle aus der Gussform, ohne dass zusätzliche Formteile oder ein Schieber erforderlich wären.

Außerdem ist es günstig, wenn der Kopfteil eine Anzahl von Verrasthaken mit Rastmitteln aufweist, z.B. zwei, vier, fünf, sechs, sieben oder mehr. Diese können dabei gleichmäßig um den Umfang des Kopfteils angeordnet sein.

Der Kopfteil der erfindungsgemäßen Einstellwelle kann günstiger Weise mit dem Schaft und dem Ritzel einstückig ausgebildet sein; zudem kann der Schaft einen in Richtung von dem Kopfteil weg abschnitts- und/oder stufenweise abnehmenden Durchmesser aufweisen. Durch diese Weiterbildung ergibt sich eine vereinfachte Herstellung des Bauteils der Einstellwelle, und es ist nunmehr noch leichter möglich, den Schaft in einem einzigen formgebenden Teil der Gussform zu formen.

In einer besonders günstigen Auslegung ist das Ritzel an einem Ende des Schaftes, nämlich jenem gegenüber dem Kopfteil, angeordnet. Hierbei kann das Ritzel an einen konischen Abschnitt des Schaftes anschließen, wobei der Außenradius des Ritzels innerhalb der Verlängerung des konischen Abschnitts verläuft.

Der Kopfteil als außerhalb des Gehäuses liegender Teil der Einstellwelle kann mit einem Ansatz für ein externes Werkzeug versehen sein. Vorzugsweise ist der Ansatz als Tiefenanschlag für ein externes Werkzeug ausgebildet, wobei er mittig entlang der Längsachse in den Kopfteil hineinragen kann.

Der Schaft kann wie bereits erwähnt eine umlaufende Schulter aufweisen, sowie zusätzlich beiderseits der Schulter jeweils einen konischen Abschnitt, die der zentrierenden Führung der Einstellwelle dienen. Dies verbessert die Stabilität der Ausrichtung des Bauteils in seiner Führung. Dabei kann zwischen der Schulter und zumindest einem der konischen Abschnitte ein Zwischenbereich mit einem gegenüber dem konischen Abschnitt abgesetzten Durchmesser ausgebildet sein, um eine Freistellung zu erreichen.

Die erfindungsgemäße Einstellwelle eignet sich für einen Einstellmechanismus in einem Fahrzeugscheinwerfer zum Verstellen einer einstellbaren Komponente des Scheinwerfers (insbesondere eines Lichtmoduls) relativ zu einem Außengehäuse des Scheinwerfers. Hierbei umfasst der Einstellmechanismus eine innere Stellwelle, welche zum Verstellen der einstellbaren Komponente ausgebildet ist, und die erfindungsgemäße Einstellwelle, deren Ritzel in einen Zahnradkranz der inneren Stellwelle eingreift. Somit wirkt das Ritzel im montierten Zustand mit dem korrespondierenden Zahnradkranz der inneren Stellwelle zusammen, welches wiederum auf einen Reflektor oder eine andere einstellbare Komponente des Scheinwerfers wirkt, um dessen/ deren Positionierung oder Ausrichtung einzustellen.

Vorteilhafte Weiterbildungen des Einstellmechanismus entsprechen jenen der erfindungsgemäßen Einstellwelle. Insbesondere kann das Gehäuse eine Schulter haben, welche mit einer am Schaft der Einstellwelle umlaufende Schulter korrespondierend gestaltet ist, wobei zwischen diesen beiden Schultern ein Raum zur Aufnahme und Halterung eines Dichtrings gebildet wird.

Zur Herstellung der erfindungsgemäßen Einstellwelle dient ein Formwerkzeug der eingangs genannten Art, bei welchem in dem ersten Formteil eine Vertiefung (als Teil des Hohlraums im Formwerkzeug) ausgebildet ist, die als Negativform einer Außenfläche des Schaftes und des Ritzels der Einstellwelle dient, und die im Bereich des Schaftes eine umlaufende Schulter aufweist, an die ein - vorzugsweise zylindrischer - Abschnitt anschließt, der zur Formgebung der Schulter und des (insbesondere nutenfreien und vorzugsweise zylindrischen) Abschnitts der Einstellwelle zur Aufnahme eines Dichtrings dient.

Hierbei ist es für die Realisierung eines einfachen Formwerkzeugs zweckmäßig, wenn der Durchmesser der Vertiefung in dem ersten Formteil in Richtung zur Spitze der Vertiefung hin abschnitts- und/oder stufenweise abnimmt. Hierbei wird der Durchmesser quer zur Achse der im Wesentlichen drehsymmetrischen Grundform gemessen.

Außerdem kann es günstig sein, wenn das erste Formteil einschließlich ihrer Vertiefung nicht nur die Negativform der Außenfläche des Schaftes und des Ritzels der Einstellwelle bildet, sondern diese Negativform auch die zum Schaft hin gewandten untere Fläche eines Teilbereichs des Kopfteils bildet, welcher an den Schaft anschließt. Dieser Teilbereich des Kopfes kann insbesondere zum Formen von unteren Flächen des zumindest einen Verrasthakens und des zumindest einen zugehörenden Rastmittels des Kopfteils dienen. Hierbei ist mit unterer Fläche eine Fläche gemeint, die in Blickrichtung parallel zur Achse des Schaftes auf das Ende des Schaftes (d.h. das Kopfteil ist vom Betrachter weg orientiert) sichtbar ist.

Wie allgemein für Spritzgießvorgänge bekannt, definieren die beiden Formteile dort, wo ihre die Form der Einstellwelle definierenden Innenflächen zusammenstoßen, eine Formtrennung, die auf der Oberfläche des Produktes (= der Einstellwelle) zu einem Grat führen kann. Gemäß der Erfindung ist die Gestaltung der Formteile dazu ausgelegt, dass die Formtrennungslinie außerhalb des Schaftes der Einstellwelle liegt, vorzugsweise am Kopfteil.

Die Erfindung samt weiteren Vorzügen und Merkmalen wird im Folgenden anhand eines nicht einschränkenden Ausführungsbeispiels näher erläutert, nämlich einer Kegelritzelwelle mit endständigem Kegelzahnrad zum Einstellen eines Lichtmoduls eines Scheinwerfers, welche in den beigefügten Zeichnungen dargestellt ist. Diese zeigen:
- Fig. 1: die Einstellwelle des Ausführungsbeispiels in perspektivischer Ansicht;
- Fig. 2: die Lage der Einstellwelle der Fig. 1 in Bezug auf das Gehäuse des Scheinwerfers in einer Explosionsansicht, wobei in den Zeichnungen das Gehäuse aufgeschnitten dargestellt ist;
- Fig. 3: einen Einstellmechanismus für einen Scheinwerferreflektor, zu dem die Einstellwelle der Fig. 1 gehört, in einer perspektivischen Ansicht;
- Fig. 4: die Komponenten des Einstellmechanismus der Fig. 3;
- Fig. 5: die Einstellwelle in montierter Position in einer Schnittansicht längs der Mittelebene des Einstellmechanismus;
- Fig. 6: eine Ansicht der Einstellwelle der Fig. 1 mit Blickrichtung entlang der Längsachse auf den Kopfteil (Ansicht der Stirnseite);
- Fig. 7: illustriert anhand einer Längsschnittdarstellung die Herstellung der Einstellwelle der Fig. 1 in einem Spritzguss-Formwerkzeug;
- Fig. 8: zeigt die Entnahme der Einstellwelle aus dem Formwerkzeug der Fig. 7;
- Fig. 9 bis 11: zeigen die Herstellung einer Einstellwelle herkömmlicher Art, wobei Fig. 9 die die eigentliche Formgebung im Spritzguss zeigt, und Fig. 10 und 11 die Entnahme des Produkts (Längsschnitte analog denen der Fig. 7 und 8);
- Fig. 12: zeigt das Detail X aus der Fig. 11, nämlich den Bereich der Ringnut; und
- Fig. 13: zeigt eine Aufsicht des unteren Formteils (Formtrennung an den Ringnuten).

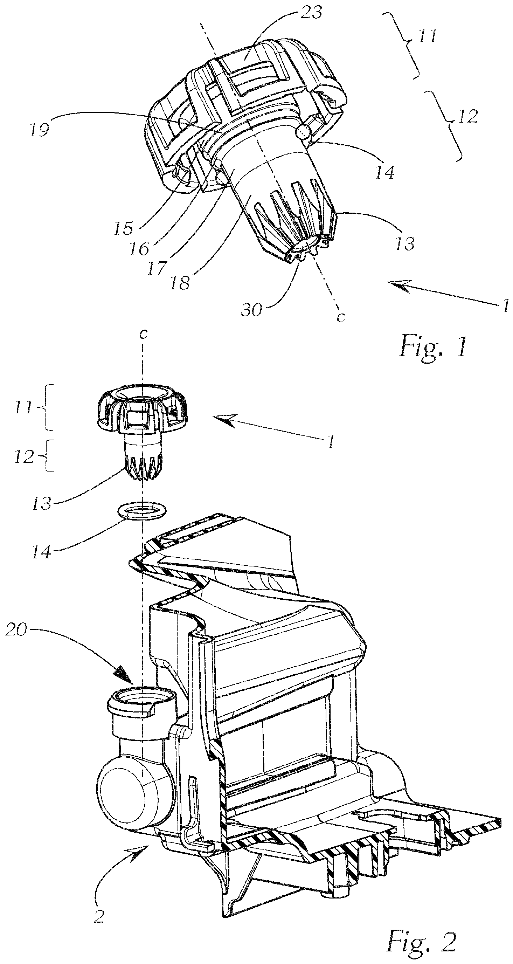

In Fig. 1 ist eine Kegelritzelwelle 1 gezeigt, die in dem Ausführungsbeispiel die erfindungsgemäße Einstellwelle verwirklicht. Es sei an dieser Stelle angemerkt, dass die Erfindung nicht auf das hier beschriebene Ausführungsbeispiel beschränkt ist; vielmehr umfasst die Erfindung sämtliche Ausgestaltungen eines Einstellwelle, die in den Bereich der angefügten Ansprüche fallen.

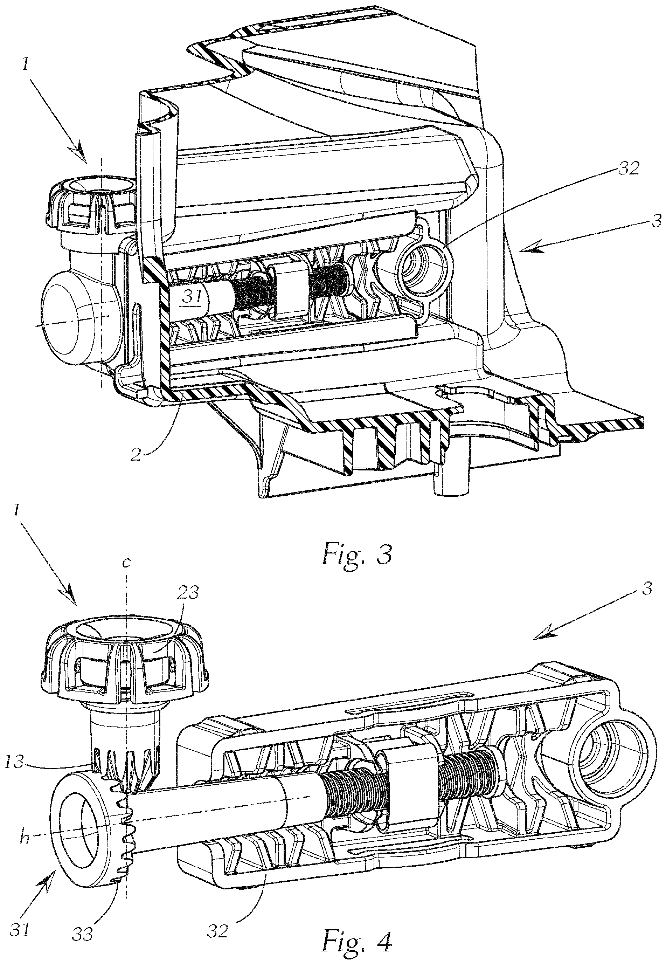

Die Kegelritzelwelle 1 ist als Komponente eines Einstellmechanismus 3 (Fig. 3) eines Fahrzeugscheinwerfers entworfen und mit ihren besonderen Merkmalen spezifisch für diesen Zweck ausgebildet. Sie gliedert sich in einen Kopfteil 11 und einen Körperteil oder Schaft 12, der entlang einer Längsachse c verläuft und an dessen Ende ein Ritzelzahnrad 13 in Form des erwähnten Kegelzahnrads vorgesehen ist. Das Ritzelzahnrad 13 wird hier auch kurz Ritzel genannt. Die Kegelritzelwelle 1 hat eine Länge von ca. 35 mm, gemessen entlang der Achse c als Abstand zwischen der Stirnseite des Kopfteils 11 und dem diesem gegenüber liegenden Ende des Schaftes 12, und einen Durchmesser des Kopfteils 11 von ca. 30 mm.

Sofern im Rahmen dieser Beschreibung die Begriffe "oben" und "unten" in Bezug auf die erfindungsgemäße Einstellwelle und spezifischer die Kegelritzelwelle verwendet werden, beziehen sich diese das Bauteil selbst - ungeachtet der Orientierung desselben im montierten Zustand -, wobei die Längsachse c vertikal gedacht ist und das Kopfteil 11 "oben" liegt und das gegenüber liegende Ende des Schaftes 12 nach "unten" weist.

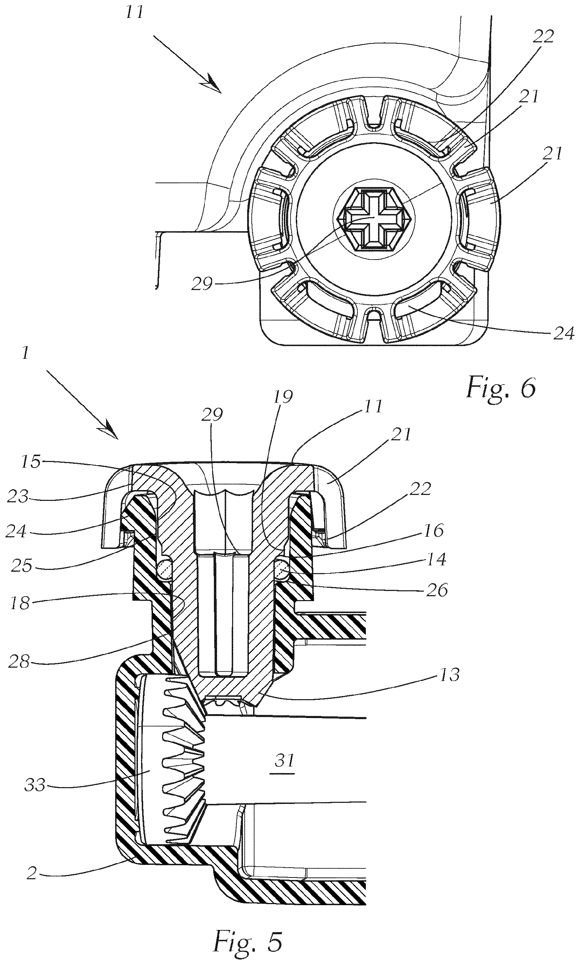

Bezugnehmend auf Fig. 2 wird die erfindungsgemäße Kegelritzelwelle 1 in eine Öffnung 20 des Gehäuses 2 des Scheinwerfers (von dem in Fig. 2 wie auch in Fig. 3 und 6 nur ein Teil gezeigt ist) eingesteckt. In der so montierten Position ist der Kopfteil 11 der von außen zugängliche Teil der Kegelritzelwelle 1 und somit des gesamten Einstellmechanismus. Vorzugsweise ist die Kegelritzelwelle 1 mit einem O-Ring 14 ausgestattet, der ein Abdichten des Gehäuses am Ort der Kegelritzelwelle 1 bzw. der dafür vorgesehenen Öffnung 20 sicherstellt. Der O-Ring 14 ist in Fig. 1 aufgeschnitten dargestellt. Bei der Montage wird der O-Ring 14 zuerst vormontiert, indem er auf den Schaft 12 der Kegelritzelwelle 1 gesteckt wird, und sodann letztere samt O-Ring in die Öffnung 20 eingesteckt und zur Verrastung gebracht, wobei wie weiter unten näher erläutert das Kopfteil 11 am Außenrand der Öffnung 20 verrastet.

In Fig. 3 und 4 ist der Einstellmechanismus 3 gezeigt, zu dem neben der Kegelritzelwelle 1 eine mit dieser zusammenwirkende Einstellschraube 31 gehört. Der Einstellmechanismus 3 ist in dem Gehäuse (Außengehäuse) 2 eines Scheinwerfers untergebracht. Im montierten Zustand ist die Kegelritzelwelle 1 um seine Längsachse c, die hier vertikal verläuft, drehbar und wie bereits erwähnt von außen zugänglich (nämlich anhand des Kopfteils 11, der im montierten Zustand außerhalb des Gehäuses 2 liegt), um ein Einstellen einer im Inneren des Gehäuses untergebrachten einzustellenden Komponente des Scheinwerfers, insbesondere eines Lichtmoduls oder Reflektors des Scheinwerfers, zu ermöglichen. Das Ritzel 13 greift hierzu in ein Gegenritzel 33 ein, nämlich einen korrespondierenden Zahnradkranz der Einstellschraube 31, die entlang einer beispielsweise horizontalen Achse h verläuft. Die Kegelritzelwelle 1 wirkt somit getriebemäßig auf die Einstellschraube 31, die als innere Stellwelle gemäß der Erfindung dient. Durch Drehung der Einstellschraube 31 wird ein mit der Einstellschraube getriebemäßig (hier z.B. über ein Schneckengetriebe) verbundener Stellblock 32 verschoben, der im Gehäuse 2 z.B. linear verschieblich gelagert ist und der mit dem einzustellenden Lichtmodul, wie z.B. einem Reflektor oder einer Lichtquelle im Scheinwerfer, verbunden ist. Im Allgemeinen ist der Stellblock ein Bauteil, das mit einer einstellbaren Komponente des Scheinwerfers fest, gelenkig oder getriebemäßig verbunden sein kann.

Wieder bezugnehmend auf Fig. 1 hat der Schaft eine im Wesentlichen drehsymmetrische Grundform, wobei hier "im Wesentlichen drehsymmetrisch" bedeutet, dass der Schaft geringfügige (hier nicht gezeigte) Abweichungen von einer drehsymmetrischen Gestalt (wie z.B. punktartige Einkerbungen oder axial verlaufende Schlitzteilungen) aufweisen kann, die eine Drehbarkeit der Kegelritzelwelle 1 um die Längsachse c nicht beeinträchtigen. Bei der in den Zeichnungen gezeigten Ausführungsform ist der Schaft 12, abgesehen natürlich von dem Ritzel 13, drehsymmetrisch. Der Schaft 12 weist nacheinander eine erste Führungsfläche 15, eine Schulter 16, einen zylindrischen Abschnitt 17 und eine zweite Führungsfläche 18 auf. Der zylindrische Abschnitt 17 dient als Sitz des O-Rings 14, dessen Position zum Kopfteil 11 hin von der Schulter 16 begrenzt wird. Die Führungsflächen 15, 18 haben jeweils konische Gestalt mit geringem Neigungswinkel gegenüber der Achse c. Die Führungsfläche 18 bildet in ihrem Endbereich zugleich die Außenbegrenzung des Ritzels 13. Das Ritzel 13 weist bevorzugt eine ungerade Zahl von Zahnungen auf, im Ausführungsbeispiel z.B. 11 Zahnungen, wobei im Allgemeinen die Zahnungszahl des Ritzels von der Dimensionierung des eigenen Durchmessers des Ritzels und der der Einstellschraube 31 abhängt.

In der Schnittansicht der Fig. 5 ist gezeigt, wie die Kegelritzelwelle 1 in dem Gehäuse 2 gelagert ist. Die Schnittebene ist hierbei die Mittelebene des Einstellmechanismus, nämlich jene Ebene, die durch die Längsachse c der Kegelritzelwelle 1 und parallel zur Achse h der Einstellschraube 31 verläuft; wenn wie im gezeigten Ausführungsbeispiel sich die Achsen c und h schneiden, liegen beide Längsachsen in der Mittelebene.

Die Öffnung 20 hat im Wesentlichen rohrförmige Gestalt und ist am unteren Ende offen, um ein Eingreifen des Ritzels 13 in das Gegenritzel 33 der Einstellschraube 31 zu gestatten. Die beiden Führungsflächen 15, 18 der Kegelritzelwelle 1 liegen an jeweils zugeordneten Hohlkonus-Abschnitten 25, 28 an, die an der Innenseite der Öffnung 20 ausgebildet sind. Durch die konische Gestaltung der Führungsflächen 15, 18 ergeben die Abschnitte 25, 28 des Gehäuses unabhängig voneinander jeweils eine selbstzentrierende Führung, die ein Verkippen der Kegelritzelwelle 1 gegenüber der Sollposition der Achse c ausschließt und für einen stabilen und sicheren Sitz des Kegelritzelwelle 1 sorgt. Dies führt vorteilhafter Weise auch zu einer verbesserten Zuverlässigkeit des Einstellmechanismus.

Zwischen den Hohlkonusabschnitten 25, 28 ist eine Schulter 26 ausgebildet. Die Schulter 26 liegt der Schulter 16 der Kegelritzelwelle 1 gegenüber; dabei sind die beiden Schultern 16, 26 vorzugsweise so angeordnet, dass sie hinsichtlich der Höhe gegeneinander versetzt sind. Somit definieren die beiden Schultern 16, 26 einen Raum, in dem der O-Ring 14 untergebracht werden kann. Auf diese Weise ist vorteilhafter Weise ein Sitz des O-Ringes definiert, ohne dass eine Nut für den O-Ring vorgesehen sein muss. Der Abstand der Schultern 16, 26 ist vorzugsweise größer als die radiale Breite der Schulter, wobei hier unter radialer Breite die Änderung des Halbdurchmessers an der Schulter gemeint ist, und legt den Strangdurchmesser des O-Rings 14 fest. Durch diese Maßnahme dichtet der O-Ring 14 in radialer Richtung zwischen dem zylindrischen Abschnitt 17 und dem diesem umgebenden Teil des Gehäuses, kann jedoch in axialer Richtung verschoben werden. Somit muss der O-Ring keine Kräfte aufnehmen, die auf die Kegelritzelwelle 1 z.B. beim Einstellen durch ein eingestecktes Werkzeug in Axialrichtung ausgeübt werden.

Außerdem weist der Schaft 12 der Kegelritzelwelle 1 zwischen der Schulter 16 und der Führungsfläche 15 einen Zwischenbereich 19 auf, der einen gegenüber dem konischen Abschnitt abgesetzten Durchmesser hat, nämlich in diesem Fall einen etwas geringeren Durchmesser (um z.B. 0,2 bis 0,3 mm) als die Führungsfläche 15. Dieser Zwischenbereich dient als Freistellung im montierten Zustand der Kegelritzelwelle 1, für eine erhöhte Toleranz gegenüber möglicher Weise auftretenden Abweichungen bei der Herstellung des Bauteils.

Die erfindungsgemäße Einstellwelle kann vorteilhafter Weise aus spritzgießfähigem Material hergestellt werden, z.B. thermoplastischem Kunststoff. Insbesondere wird die gezeigte Kegelritzelwelle 1 aus Polybutylentherphthalat (PBT) oder einem Polyamid (PA) erzeugt. Für das Spritzgießen werden Gusswerkzeuge und Gussverfahren nach an sich bekannter Art verwendet. Das Gehäuse 2 besteht z.B. aus Thermoplast- oder Duroplastmaterial, kann aber auch aus metallischem Werkstoff, insbesondere Aluminium, angefertigt sein.

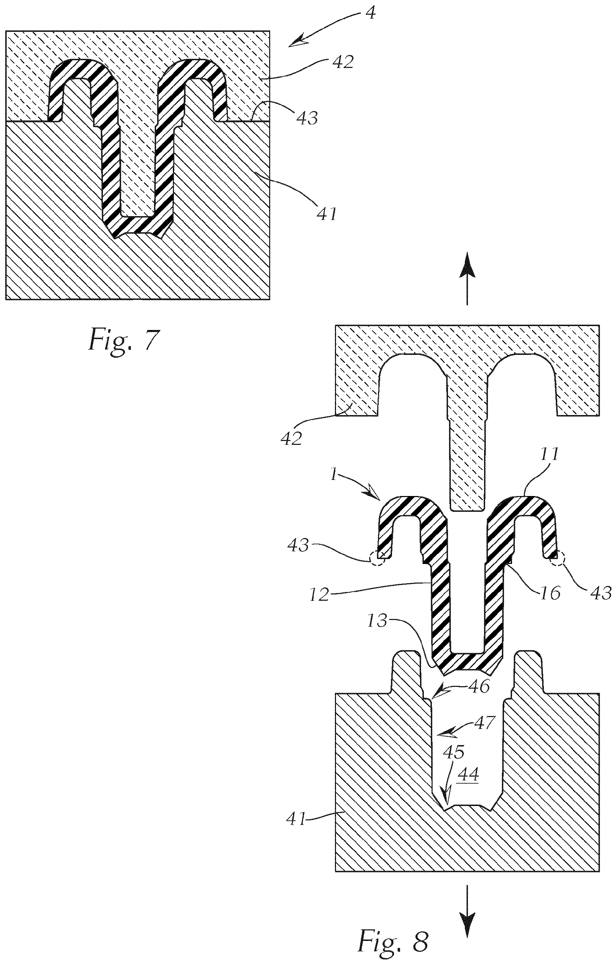

Es sei darauf hingewiesen, dass die Kegelritzelwelle 1 ein in einem einzigen Gießvorgang herstellbares Bauteil ist, somit ist der Kopfteil 11 mit dem Schaft 12 und dem Ritzel 13 einstückig. Außerdem ist die Formgebung des im Wesentlichen drehsymmetrischen Schaftes 12 so gewählt, dass dessen spezifische Form durch ein einziges Gusswerkzeug (wie z.B. in Fig. 7 und 8 gezeigt) erzeugt werden kann. Der Schaft 12 hat, der Forderung der Vermeidung einer Werkzeugteilung entsprechend, fortlaufend abnehmende Durchmesser, wenn man vom Ansatz des Schaftes am Übergang zum Kopf in Richtung zum unteren Ende fortschreitet: der Durchmesser nimmt stets ab - gegebenenfalls auch sprunghaft, wie an der Stelle der Schulter 16 - oder kann auch in einem oder mehreren definierten Bereichen - wie dem zylindrischen Abschnitt 17 - gleichbleiben, nimmt jedoch in Richtung zum dem Kopfteil 11 abgewandten Ende hin nirgends zu. Beispielsweise kann im zylindrischen Abschnitt 17 der Durchmesser D (Fig. 4) des Schaftes 15 mm betragen, und nimmt dann im Bereich der Führungsfläche 18 entsprechend der Neigung der konischen Form ab, in diesem Fall z.B. bei einer Neigung von 2° von 15 mm auf 14,6 mm. (Natürlich wird der Durchmesser quer zur Achse c des Schaftes gemessen.)

Bezugnehmend auf Fig. 5 und 6 weist der Kopfteil 11 eine Formgebung auf, die eine Bedienung der Kegelritzelwelle 1 ermöglicht, nämlich direkt manuell und/oder mithilfe eines externen Werkzeugs. Hierzu weist der Kopfteil 11 an der Außenseite, insbesondere der (nach oben weisenden) Stirnseite, einen Ansatz 29 für ein externes Werkzeug auf. Der Ansatz 29 ist vorzugsweise als Tiefenanschlag für ein externes Werkzeug ausgebildet und ragt in den Kopfteil 11 und gegebenenfalls in einen Teil des Schaftes 12 mittig entlang der Längsachse c hinein. Der Tiefenansatz 29 stellt somit einen von außen zugänglichen Ansatz für ein externes Werkzeug dar, z.B. einen Inbus-Schlüssel und/oder einen Schraubendreher; hierfür weist er z.B. die Formgebung als Innen-Sechskant sowie an der Endfläche einen Schlitz/Kreuzschlitz/Stern (insbesondere Torx) als Mitnahmeprofil auf. Außerdem eignet sich die Formgebung des Kopfteils 11 mit seinen ausladenden Verrasthaken auch gut als manueller Einstellknopf zur direkten Handhabung der Kegelritzelwelle 1 mit den Fingern einer Hand.

Der Tiefenanschlag 29 verringert zudem die zur Herstellung des Bauteils der Kegelritzelwelle 1 nötige Materialmenge. Ebenfalls zur Verringerung des Materialaufwands ist am Ende des Schaftes 12, im Inneren der Schrägverzahnung des Ritzels 13, ist eine axial nach innen verlaufende Ausnehmung 30 geformt, sodass das Bauteil weitgehend hohl ist.

Weiterhin bezugnehmend auf Fig. 5 und 6 ist der Kopfteil 11 so ausgebildet, dass eine Verrastung der Kegelritzelwelle 1 an der Öffnung 20 möglich ist. Der Kopfteil 11 weist eine Anzahl, hier sechs, Verrasthaken 21 auf. Jeder Verrasthaken hat die Form eines von der Längsachse c nach außen ragenden Vorsprungs oder Auslegers, der nach Art einer Krempe zurückgebogen ist und an dem sich ein zum Schaft 12 hin orientiertes Rastmittel 22 befindet. Das Rastmittel 22 hat z.B. die Form einer Nase, die an einer Innenseite des krempenartigen Randes des Verrasthakens 21 angesetzt ist. Das Rastmittel 22 greift unter den Außenrand 24 der Öffnung 20, der zu diesem Zweck eine etwas nach außen ragend ausgebildet ist, und zwar um den gesamten Umfang des Außenrandes 24 oder auch lediglich an einem Teil des Umfangs, beispielsweise entsprechend einem Sektor von ca. 180°.

Damit das Rastmittel 22 in einer Gussform ohne sogenannten Schieber hergestellt werden kann, ist im Verrasthaken 21 eine Versatzöffnung 23 ausgebildet, die oberhalb des Rastmittels 22 liegt. Aufgrund dieser Versatzöffnung 23 ist das Rastmittel 22 von oben gesehen, d.h. in Blickrichtung parallel zur Längsachse c auf den Kopfteil 11 (genauer dessen Stirnseite) gesehen, freiliegend. Hierbei bedeutet "freiliegend", dass das Rastmittel 22 zur Gänze von oben sichtbar ist (bei einer Projektion parallel zur Achse c nach oben liegt es vollständig innerhalb des durch die Umrandung der Versatzöffnung gebildeten Bereichs). Somit kann das Rastmittel 22 in einer Gussform erzeugt und aus dieser auf einfache Weise entlang der der Versatzöffnung entsprechenden Flucht entformt werden.

Die Anzahl der Verrasthaken ist im gezeigten Ausführungsbeispiel sechs, kann jedoch im Allgemeinen beliebig gewählt sein; z.B. zwei, drei, fünf oder sieben.

Die Erfindung ermöglicht eine vereinfachte Auslegung des Gusswerkzeugs zur Herstellung des Bauteils der Einstellwelle, was eine raschere und kostengünstige Herstellung gestattet.

Aufgrund des zum Ende des Schaftes hin abnehmenden Durchmessers ist es nunmehr möglich, den Schaft in einem einzigen formgebenden Teil der Gussform zu formen. Dadurch wird vermieden, dass an dem Schaft durch Fugen der Gussform bedingte Trennungsmarkierungen (auch als Formtrennungen bezeichnet) entstehen, die sich in der Regel nachteilig auf die Dichtungseigenschaften auswirken.

Dieser Aspekt der Erfindung ist in den Fig. 7 und 8 illustriert, die in Längsschnittdarstellungen (Schnitt entlang der Längsachse c der erfindungsgemäßen Einstellwelle) den Spritzguss und die Entnahme der als Produkt des Spritzgießvorgangs erzeugten Einstellwelle 1 zeigen. Die Einstellwelle wird durch Spritzgießen in einem Formwerkzeug 4 hergestellt, welches aufgrund der Erfindung aus möglichst wenigen Formteilen, in diesem Fall aus nur zwei Formteilen 41 und 42, bestehen kann. Das obere Formteil 42 definiert im Spritzguss die Oberseite des Kopfes 11 (welche auch in Fig. 6 erkennbar ist) einschließlich des Tiefenansatzes 29, der teilweise in den Schaft hineinläuft. Das untere Formteil 41 legt durch ihre Formgebung die Gestalt der "unteren" Flächen der Einstellwelle fest, d.h. jener Oberflächen, die bei Betrachtung der Einstellwelle 1 auf das Ende des Schaftes (somit "von unten"), sichtbar sind: nämlich den Schaft 12 (genauer gesagt dessen Außenflächen), das Ritzel 13 sowie die unteren Flächen des Kopfes 11. Hierzu ist in dem Formteil 41 eine Vertiefung 44 ausgebildet, die im Wesentlichen zylindrisch-konische Gestalt hat, und die eine Negativform der Form des Schaftes mit dessen im Wesentlichen drehsymmetrischen Grundform bildet. Somit ist die Vertiefung 44 bei der hier gezeigten Ausführungsform drehsymmetrisch - mit Ausnahme natürlich von dem Ende 45, das das Ritzel 13 formt, - und hat insbesondere eine Schulter 46 und einen daran anschließenden zylindrischen Abschnitt 47, die die Schulter 16 und zylindrische Fläche 17 des Schaftes 12 definieren. Die den Schaft definierende Vertiefung 44 hat fortlaufend abnehmende Durchmesser, wenn man von der Öffnung der Vertiefung in Richtung zum Ende 45 fortschreitet: der Durchmesser nimmt stets ab - gegebenenfalls auch sprunghaft, wie an der Stelle der Schulter 46 - oder kann auch in einem oder mehreren definierten Bereichen - wie dem zylindrischen Abschnitt 47 - gleichbleiben, nimmt jedoch in Richtung zum Ende 45 hin nirgends zu.

Die Formtrennung 43 zwischen den beiden Formteilen 41, 42 liegt vorteilhafter Weise außerhalb des Schaftes, vorzugsweise am Kopfteil 11, und noch bevorzugter Weise an einem äußeren Rand des Kopfteils, der mit keinem anderen Bauteil oder insbesondere einem O-Ring zusammenwirkt. Die Formtrennung 43 führt, wie für Spritzgießverfahren weitgehend unvermeidbar, nach Entnahme des hergestellten Bauteils - der Einstellwelle 1 - zu einem Grat, der hier zufolge der Erfindung außerhalb des Schaftes liegt. Im Besonderen liegt am Ort der Dichtung, d.h. speziell im Bereich der Schulter 46 und der Fläche 47, keine Formtrennung vor, somit ist der Bereich des O-Rings bei der erfindungsgemäßen Lösung frei von einer Werkzeugteilung, was die Qualität der Dichtheit verbessert und die Lebenszeit des O-Rings erhöht.

Dagegen weisen bisherige Gestaltungen der Einstellwelle Schultern mit zunehmendem Durchmesser auf, insbesondere in Form einer umlaufenden Nut, die eine Teilung des Gusswerkzeugs in diesem Bereich erforderlich machen. Insbesondere bei Verwendung eines O-Rings war dies ungünstig, da die Werkzeugteilung die Qualität der Dichtheit und O-Ring-Lebensdauer beeinträchtigt.

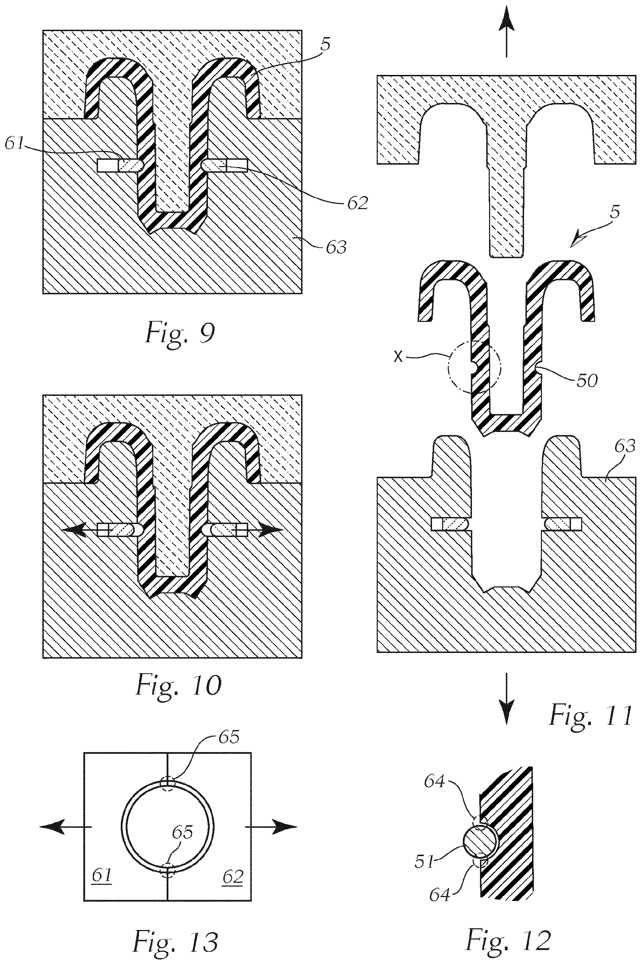

Die Fig. 9 bis 13 zeigen die Problematik bei der Herstellung herkömmlicher Einstellwellen, am Beispiel eines herkömmlichen Bauteils 5 einer Einstellwelle, worin der O-Ring 51 (Fig. 12) in einer Ringnut 50 gehalten wird. Diese Nut 50 muss in dem zugeordneten Formwerkzeug 6 durch Schieber 61, 62 erzeugt werden, die zusätzlich in dem Werkzeug, beispielsweise am unteren Formteil 63, vorgesehen werden müssen. Während des eigentlichen Spritzgießens (Fig. 9) sind die Schieber 61, 62 geschlossen; nach Fertigstellung des Gießvorgangs müssen die Schieber geöffnet werden, indem sie nach außen verschoben werden (Fig. 10), um die Entnahme des erzeugten Bauteils 6 (Fig. 11) zu ermöglichen. Wie in Fig. 12 erkennbar ist, weist das Bauteil 6 als Folge der beteiligten Werkzeugkomponenten, nämlich dem unteren Formteil 63 und den Schiebern 61, 62, Formtrennungen 64 auf. Außerdem zeigt Fig. 13 in einer Aufsicht die Anordnung der Schieber 61, 62 im geschlossenen Zustand, und es ist erkennbar, dass zusätzliche Formtrennungen zwischen den Schiebern 61, 62 entstehen. Diese Formtrennungen 64, 65 liegen an den Dichtflächen im Bereich der Ringnut 50 und führen zu unerwünschten Beeinträchtigung der Dichtwirkung und/oder Lebensdauer des O-Rings 51. Diese Nachteile werden durch die Erfindung vermieden.

Die weiterbildenden Merkmale der Erfindung unterstützen die vorteilhaften Eigenschaften der Erfindung zusätzlich. So ergibt insbesondere die Anordnung des O-Rings zwischen zwei gegenüber liegenden Schultern des Schaftes einerseits und der Innenseite der Gehäuseöffnung andererseits besondere Vorteile, da dies eine Nut zum Halten eines O-Rings überflüssig macht und wie bereits erwähnt die Montage und Lebenszeit des O-Rings verbessert.

Durch die voneinander abgesetzten Schultern ergibt sich zudem eine Erleichterung der Genauigkeitsanforderungen, da die erfindungsgemäße Gestaltung eine große Variation in der relativen Lage der Schultern 16 und 26 zueinander zulässt.

Durch die Anordnung der Verrastungselemente an der Außenseite, d.h. an einem vom Schaft entfernten Bereich der Einstellwelle, ergibt sich nicht nur eine noch günstigere Gestaltung des Schaftes und somit vereinfachte Herstellung beim Spritzguss, sondern auch eine umlaufende Verrastung, die einfacher und zugleich robuster ist, da bei herkömmlichen Einstellwellen innenliegende Verrastungen verhältnismäßig filigran sind. Zudem ist die Verwendung des erfindungsgemäßen Einstellwelle mit dieser Verrastung auch bei steifen Gehäusen (Duroplast, Aluminium-Druckguss) möglich.

Selbstverständlich wird der Fachmann in der Lage sein, viele andere gleichwertige Formen der Einstellwelle zu entwerfen und hierzu Abwandlungen und/oder Ergänzungen je nach den Bedürfnissen des Einzelfalls vornehmen kann. So kann beispielsweise das Ritzel der erfindungsgemäßen Einstellwelle auch andere Gestaltungen als die eines Kegelzahnrads aufweisen, z.B. als Stirnrad oder Kronrad; zudem können die Achsen der Einstellwelle und der inneren Stellwelle (Einstellschraube) parallel und/oder zueinander versetzt verlaufen. Weitere Variationen werden bereits in Zusammenhang mit der oben beschriebenen Ausführungsform erläutert.

## Patentansprüche

1. Einstellwelle (1) zum Einstellen einer einstellbaren Komponente eines Fahrzeugscheinwerfers, mit einem Kopfteil (11) und mit einem an den Kopfteil anschließenden Schaft (12), der eine um eine Längsachse (c) im Wesentlichen drehsymmetrische Grundform aufweist, sowie mit einem Ritzel (13), welches im montierten Zustand mit einem Zahnradkranz (33) einer inneren Stellwelle (31) des Scheinwerfers zusammenwirkt,
wobei der Kopfteil (11) zumindest einen von der Längsachse (c) nach außen ragenden Verrasthaken (21) mit zumindest einem daran befindlichen Rastmittel (22) aufweist,
wobei der Schaft (12) eine umlaufende Schulter (16) aufweist, an die ein vorzugsweise zylindrischer Abschnitt (17) zur Aufnahme eines Dichtrings (14) anschließt, **dadurch gekennzeichnet, dass**
das zumindest eine Rastmittel (22) des Verrasthakens (21) zum Schaft (12) hin orientiert ist und **dass** der Verrasthaken (21) eine Versatzöffnung (23) aufweist, die oberhalb des Rastmittels (22) liegt und durch welche das Rastmittel (22), in Blickrichtung parallel zur Längsachse (c) auf den Kopfteil (11) gesehen, zur Gänze von oben sichtbar ist.

2. Einstellwelle nach Anspruch 1, **dadurch gekennzeichnet, dass** der Kopfteil (11) mit dem Schaft (12) und dem Ritzel (13) einstückig ist.

3. Einstellwelle nach Anspruch 1 oder 2, **dadurch gekennzeichnet, dass** der Kopfteil (11) eine Anzahl von Verrasthaken (21) mit Rastmitteln (22) aufweist, die gleichmäßig um den Umfang des Kopfteils angeordnet sind.

4. Einstellwelle nach einem der vorhergehenden Ansprüche, **dadurch gekennzeichnet, dass** der Schaft (12) einen in Richtung von dem Kopfteil weg abschnitts- und/oder stufenweise abnehmenden Durchmesser aufweist, gemessen quer zur Achse (c) der im Wesentlichen drehsymmetrischen Grundform.

5. Einstellwelle nach einem der vorhergehenden Ansprüche, **dadurch gekennzeichnet, dass** das Ritzel (13) an einem Ende des Schaftes (12) gegenüber dem Kopfteil (11) angeordnet ist.

6. Einstellwelle nach Anspruch 5, **dadurch gekennzeichnet, dass** das Ritzel (13) an einen konischen Abschnitt (18) des Schaftes anschließt, wobei der Außenradius des Ritzels (13) innerhalb der Verlängerung des konischen Abschnitts verläuft.

7. Einstellwelle nach einem der vorhergehenden Ansprüche, **dadurch gekennzeichnet, dass** der Kopfteil (11) einen Ansatz (29) für ein externes Werkzeug aufweist, wobei der Ansatz (29) vorzugsweise als Tiefenanschlag für ein externes Werkzeug ausgebildet ist und mittig entlang der Längsachse (c) in den Kopfteil (11) hineinragt.

8. Einstellwelle nach einem der vorhergehenden Ansprüche, **dadurch gekennzeichnet, dass** der Schaft (12) eine umlaufende Schulter (16) aufweist, sowie beiderseits der Schulter (16) jeweils einen konischen Abschnitt (15,18) zur zentrierenden Führung der Einstellwelle.

9. Einstellwelle nach Anspruch 8, **dadurch gekennzeichnet, dass** zwischen der Schulter (16) und zumindest einem der konischen Abschnitte (15) ein Zwischenbereich (19) mit einem gegenüber dem konischen Abschnitt abgesetzten Durchmesser ausgebildet ist.

10. Einstellmechanismus (3) in einem Fahrzeugscheinwerfer zum Verstellen einer einstellbaren Komponente (32) des Scheinwerfers, insbesondere eines Lichtmoduls, relativ zu einem Außengehäuse (2) des Scheinwerfers, umfassend eine innere Stellwelle (31), welche zum Verstellen der einstellbaren Komponente (32) ausgebildet ist, und eine Einstellwelle (1) gemäß einem der Ansprüche 1 bis 9, wobei das Ritzel (13) der Einstellwelle (1) in einen Zahnradkranz (33) der inneren Stellwelle (31) eingreift.

11. Einstellmechanismus nach Anspruch 10, **gekennzeichnet durch** eine Schulter (26) im Gehäuse (2), wobei die Schulter (26) des Gehäuses mit einer am Schaft (12) der Einstellwelle (1) umlaufende Schulter (16) korrespondierend gestaltet ist, wobei zwischen diesen beiden Schultern (16, 26) ein Raum zur Aufnahme und Halterung eines Dichtrings (14) gebildet wird.

12. Verfahren zum Erzeugen einer Einstellwelle (1) nach einem der Ansprüche 1 bis 9 in einem Abformverfahren, insbesondere Spritzgießverfahren, unter Verwendung eines Formwerkzeugs (4), wobei das Formwerkzeug ein erstes und ein zweites Formteil (41, 42) umfasst, zwischen denen ein Hohlraum zum Formen der Einstellwelle (1) gebildet ist, wobei in dem ersten Formteil (41) eine Vertiefung (44) ausgebildet ist, die eine Negativform einer Außenfläche des Schaftes (12) und des Ritzels (13) der Einstellwelle bildet, wobei die Vertiefung (44) im Bereich des Schaftes eine umlaufende Schulter (46) aufweist, an die ein vorzugsweise zylindrischer Abschnitt (47) anschließt, zur Formgebung der Schulter (16) und des vorzugsweise zylindrischen Abschnitts (17) der Einstellwelle zur Aufnahme eines Dichtrings (14).

13. Verfahren nach Anspruch 12, **dadurch gekennzeichnet, dass** die Vertiefung (44) einen der in Richtung zu ihrem Ende (45) hin abschnitts- und/ oder stufenweise abnehmenden Durchmesser, gemessen quer zur Achse (c) der im Wesentlichen drehsymmetrischen Grundform, aufweist.

14. Verfahren nach Anspruch 12 oder 13, **dadurch gekennzeichnet, dass** das erste Formteil (41) eine Negativform sowohl der Außenfläche des Schaftes (12) und des Ritzels (13) der Einstellwelle als auch einer zum Schaft hin gewandten unteren Fläche eines Teilbereichs des Kopfteils (11) bildet, welcher an den Schaft anschließt.

15. Verfahren nach einem der Ansprüche 12 bis 14, **dadurch gekennzeichnet, dass** das erste und das zweite Formteil eine Formtrennung (43) definieren, die hinsichtlich der Einstellwelle (1) außerhalb des Schaftes (12) liegt, vorzugsweise am Kopfteil (11) der Einstellwelle.

## Claims

1. An adjuster shaft (1) for adjusting an adjustable component of a vehicle headlamp, comprising a head part (11) and comprising a stem (12), which adjoins the head part and which has a basic shape which is substantially rotationally symmetrical about a longitudinal axis (c), and also comprising a pinion (13), which in the assembled state cooperates with a gearwheel rim (33) of an inner actuating shaft (31) of the headlamp,
wherein the head part (11) has at least one latching hook (21), which protrudes outwardly from the longitudinal axis (c) and has at least one latch means (22) disposed thereon, wherein the stem (12) has a peripheral shoulder (16), which is adjoined by a preferably cylindrical portion (17) for receiving a ring seal (14),
**characterised in that**
the at least one latch means (22) of the latching hook (21) is oriented toward the stem (12), and **in that** the latching hook (21) has an offset opening (23), which lies above the latch means (22) and through which the latch means (22) is visible in full from above, as considered in the viewing direction toward the head part (11), parallel to the longitudinal axis (c).

2. The adjuster shaft according to claim 1, **characterised in that** the head part (11) is formed in one piece with the stem (12) and the pinion (13).

3. The adjuster shaft according to claim 1 or 2, **characterised in that** the head part (11) has a number of latching hooks (21) with detent means (22) which are arranged uniformly around the periphery of the head part.

4. The adjuster shaft according to any one of the preceding claims, **characterised in that** the stem (12) has a diameter that decreases in sections and/or in steps in a direction away from the head part, as measured transversely to the axis (c) of the substantially rotationally symmetrical basic shape.

5. The adjuster shaft according to any one of the preceding claims, **characterised in that** the pinion (13) is arranged at an end of the stem (12) opposite the head part (11).

6. The adjuster shaft according to claim 5, **characterised in that** the pinion (13) adjoins a conical portion (18) of the stem, wherein the outer radius of the pinion (13) runs within the extension of the conical portion.

7. The adjuster shaft according to any one of the preceding claims, **characterised in that** the head part (11) has an attachment (29) for an external tool, wherein the attachment (29) is preferably formed as a depth stop for an external tool and protrudes into the head part (11) centrally along the longitudinal axis (c).

8. The adjuster shaft according to any one of the preceding claims, **characterised in that** the stem (12) has a peripheral shoulder (16), and on each of the two sides of the shoulder (16) a conical portion (15, 18) for guiding the adjuster shaft in a centred manner.

9. The adjuster shaft according to claim 8, **characterised in that** an intermediate region (19) with a diameter that is reduced compared to the conical portion is formed between the shoulder (16) and at least one of the conical portions (15).

10. An adjuster mechanism (3) in a vehicle headlamp for displacing an adjustable component (32) of the headlamp, in particular of a light module, relative to an outer housing (2) of the headlamp, said mechanism comprising an inner actuating shaft (31) which is designed to displace the adjustable component (32), and an adjuster shaft (1) according to any one of claims 1 to 9, wherein the pinion (13) of the adjuster shaft (1) engages in a gearwheel rim (32) of the inner actuating shaft (31).

11. The adjuster mechanism according to claim 10, **characterised by** a shoulder (26) in the housing (2), wherein the shoulder (26) of the housing is formed in a manner corresponding to a peripheral shoulder (16) on the stem (12) of the adjuster shaft (1), wherein a space for receiving and supporting a ring seal (14) is formed between these two shoulders (16, 26).

12. A method for generating an adjuster shaft (1) according to any one of claims 1 to 9 in a moulding method, in particular an injection moulding method, with use of a mould (4), wherein the mould comprises a first and a second mould part (41, 42), between which there is formed a hollow space for moulding the adjuster shaft (1), wherein an indentation (44) is formed in the first mould part and forms a negative shape of an outer surface of the stem (12) and of the pinion (13) of the adjuster shaft, wherein the indentation (44) in the region of the stem has a peripheral shoulder (46), which is adjoined by a preferably cylindrical portion (47), for shaping the shoulder (16) and the preferably cylindrical portion (17) of the adjuster shaft for receiving a ring seal (14) .

13. The method according to claim 12, **characterised in that** the indentation (44) has a diameter that decreases in sections and/or in steps in a direction toward its end (45), as measured transversely to the axis (c) of the substantially rotationally symmetrical basic shape.

14. The method according to claim 12 or 13, **characterised in that** the first mould part (41) forms a negative shape both of the outer surface of the stem (12) and of the pinion (13) of the adjuster shaft and also of a lower surface of a region of the head part (11) facing toward the stem and adjoining the stem.

15. The method according to any one of claims 12 to 14, **characterised in that** the first and the second mould part define a separation line (43) which, in respect of the adjuster shaft (1), lies outside the stem (12) and is preferably disposed on the head part (11) of the adjuster shaft.

## Revendications

1. Axe de réglage (1) pour le réglage d'un élément réglable d'un phare de véhicule, avec une partie tête (11) et avec une tige (12) se raccordant à la partie tête, qui présente une forme de base ayant sensiblement une symétrie de révolution autour d'un axe longitudinal (c), ainsi qu'avec un pignon (13), lequel coopère, dans l'état monté, avec une couronne de roue dentée (33) d'un arbre de réglage interne (31) du phare,
la partie tête (11) présentant au moins un crochet d'encliquetage (21) faisant saillie vers l'extérieur à partir l'axe longitudinal (c), avec au moins un moyen d'encliquetage (22) se trouvant sur celui-ci, la tige (12) présentant un épaulement périphérique (16) sur lequel se raccorde une section (17), de préférence cylindrique, pour la réception d'une bague d'étanchéité (14),
**caractérisé par le fait que**
ledit au moins un moyen d'encliquetage (22) du crochet d'encliquetage (21) est orienté vers la tige (12) et **par le fait que** le crochet d'encliquetage (21) présente une ouverture de déplacement (23), qui se situe au-dessus du moyen d'encliquetage (22) et par laquelle le moyen d'encliquetage (22), vu dans la direction d'observation parallèlement à l'axe longitudinal (c) sur la partie tête (11), est visible en totalité du dessus.

2. Axe de réglage selon la revendication 1, **caractérisé par le fait que** la partie tête (11) est d'un seul tenant avec la tige (12) et le pignon (13).

3. Axe de réglage selon l'une des revendications 1 ou 2, **caractérisé par le fait que** la partie tête (11) présente un nombre de crochets d'encliquetage (21) avec des moyens d'encliquetage (22), qui sont disposés uniformément autour de la périphérie de la partie tête.

4. Axe de réglage selon l'une des revendications précédentes, **caractérisé par le fait que** la tige (12) présente un diamètre décroissant par sections et/ou par paliers en direction s'écartant de la partie tête, mesuré transversalement à l'axe (c) de la forme de base ayant sensiblement une symétrie de révolution.

5. Axe de réglage selon l'une des revendications précédentes, **caractérisé par le fait que** le pignon (13) est disposé à une extrémité de la tige (12) à l'opposé de la partie tête (11).

6. Axe de réglage selon la revendication 5, **caractérisé par le fait que** le pignon (13) se raccorde à une section conique (18) de la tige, le rayon externe du pignon (13) s'étendant à l'intérieur de l'extension de la section conique.

7. Axe de réglage selon l'une des revendications précédentes, **caractérisé par le fait que** la partie tête (11) présente une base (29) pour un outil externe, la base (29) étant réalisée de préférence en tant que butée de profondeur pour un outil externe et faisant saillie en position médiane le long de l'axe longitudinal (c) dans la partie tête (11).

8. Axe de réglage selon l'une des revendications précédentes, **caractérisé par le fait que** la tige (12) présente un épaulement périphérique (16), ainsi que de chaque côté de l'épaulement (16) respectivement une section conique (15, 18) pour le guidage centrant de l'axe de réglage.

9. Axe de réglage selon la revendication 8, **caractérisé par le fait qu'**entre l'épaulement (16) et au moins l'une des sections coniques (15), une zone intermédiaire (19) est réalisée avec un diamètre décalé par rapport à la section conique.

10. Mécanisme de réglage (3) dans un phare de véhicule pour le réglage d'un élément réglable (32) du phare, en particulier d'un module d'éclairage, par rapport à un boîtier externe (2) du phare, comportant un arbre de réglage interne (31), lequel est réalisé pour le réglage de l'élément réglable (32), et un axe de réglage (1) selon l'une des revendications 1 à 9, le pignon (13) de l'axe de réglage (1) venant en prise dans une couronne de roue dentée (33) de l'arbre de réglage interne (31).

11. Mécanisme de réglage selon la revendication 10, **caractérisé par** un épaulement (26) dans le boîtier (2), l'épaulement (26) du boîtier étant conçu correspondant à un épaulement périphérique (16) sur la tige (12) de l'axe de réglage (1), où, entre ces deux épaulements (16, 26), un espace est formé pour la réception et le maintien d'une bague d'étanchéité (14).

12. Procédé de fabrication d'un axe de réglage (1) selon l'une des revendications 1 à 9 dans un procédé de moulage, en particulier un procédé de moulage par injection, au moyen d'un moule (4), dans lequel le moule comporte une première et une seconde partie de moule (41, 42), entre lesquelles une cavité est formée pour le moulage de l'axe de réglage (1), dans lequel, dans la première partie de moule (41), une empreinte (44) est formée, qui forme un moule négatif d'une surface externe de la tige (12) et du pignon (13) de l'axe de réglage, dans lequel l'empreinte (44) présente dans la région de la tige un épaulement périphérique (46) auquel une section (47), de préférence cylindrique, se raccorde, pour le formage de l'épaulement (16) et de la section (17), de préférence cylindrique, de l'axe de réglage pour la réception d'une bague d'étanchéité (14).

13. Procédé selon la revendication 12, **caractérisé par le fait que** l'empreinte (44) présente un diamètre décroissant par sections et/ou par paliers en direction de son extrémité (45), mesuré transversalement à l'axe (c) de la forme de base ayant sensiblement une symétrie de révolution.

14. Procédé selon l'une des revendications 12 ou 13, **caractérisé par le fait que** la première partie de moule (41) forme un moule négatif non seulement de la surface externe de la tige (12) et du pignon (13) de l'axe de réglage, mais encore d'une surface inférieure tournée vers la tige d'une région partielle de la partie tête (11), laquelle se raccorde à la tige.

15. Procédé selon l'une des revendications 12 à 14, **caractérisé par le fait que** la première et la seconde partie de moule définissent une séparation de moule (43), qui, par rapport à l'axe de réglage (1), se situe à l'extérieur de la tige (12), de préférence sur la partie tête (11) de l'axe de réglage.
